# DEMANDE DE BREVET EUROPEEN

(11) **EP 4 459 884 A1**
(43) Date de publication de la demande: **06.11.2024**
(21) Numéro de dépôt: 24171241.3
(22) Date de dépôt: 19.04.2024
(51) Int. Cl.: H04B 5/00, H04B 5/72, H04B 5/79

(54) **APPAREILLAGE ELECTRIQUE CONFIGURABLE PAR COMMUNICATION EN CHAMP PROCHE ET PROCEDES ASSOCIES**

(30) Priorité: 03.05.2023 FR 2304439
(71) Demandeur: HAGER-ELECTRO SAS, 67210 Obernai (FR)
(72) Inventeur: GACEUS, Vincent, 67210 OBERNAI (FR); HEITZ, Jean-Philippe, 67400 ILLKIRCH-GRAFFENSTADEN (FR); LIKISSAS, Laurent, 30900 NIMES (FR); VINCENT, Renaud, 67210 OBERNAI (FR); ZEISSLOFF, Thibaut, 67210 BERNARDSWILLER (FR)
(74) Mandataire: Cabinet Nuss

(57) **Abrégé**

L'invention concerne un appareillage électrique configurable (1) par communication en champ proche comprenant un boîtier (2), une ligne électrique (3), une unité de contrôle électronique (4), un premier module de communication en champ proche (5) comprenant un organe d'émission/réception d'ondes électromagnétiques (6) agencé pour communiquer avec une unité de commande distante (7), ledit appareillage électrique configurable (1) est caractérisé :
- en ce que le premier module de communication en champ proche (5) comprend en outre au moins une mémoire non volatile (9) configurée pour stocker au moins ledit au moins un ensemble de paramètres de réglages et/ou un ensemble de données représentatif des caractéristiques de l'appareillage électrique configurable (1) et/ou un ensemble de données représentatif de l'historique de fonctionnement de l'appareillage électrique configurable (1), ladite au moins une mémoire non volatile (9) étant reliée électriquement audit au moins un organe d'émission/réception d'ondes électromagnétiques (6),
- en ce que le premier module de communication en champ proche (5) est agencé pour être alimenté en énergie au moins par le champ électromagnétique du deuxième module de communication en champ proche (8) de l'unité de commande distante (7) en l'absence d'alimentation directe de ladite au moins une mémoire non volatile (9) de préférence par le réseau électrique ou par une source auxiliaire.

## Description

L'invention concerne le domaine des appareillages électriques configurables par communication en champ proche, de préférence du type appareillages électriques de protection configurables par communication en champ proche.

Dans le domaine de la protection électrique, l'on connaît différents types d'appareillages électriques qui présentent le point commun d'être configurables par l'intermédiaire d'une interface homme machine essentiellement mécanique. Ce type d'interface homme machine peut par exemple de manière non limitative comprendre au moins un bouton et/ou au moins une roue codeuse et/ou au moins un commutateur à bascule et/ou au moins un commutateur coulissant et/ou au moins un interrupteur à glissière. Ce type d'interface homme machine peut se retrouver par exemple et de manière non limitative sur un disjoncteur, tel qu'un disjoncteur ouvert couramment désigné par l'acronyme ACB signifiant Air Circuit Breaker en anglais ou sur un bloc différentiel additionnel couramment désigné par l'acronyme AOB signifiant Add On Block en anglais ou sur un disjoncteur à boîtier moulé couramment désigné par l'acronyme MCCB signifiant Moulded Case Circuit Breaker en anglais ou sur un module de communication ou sur une horloge astronomique ou sur une minuterie. Ce type d'interface homme machine se situe généralement au niveau de la face avant du boîtier de l'appareillage électrique configurable.

Toutefois, ce type d'interface homme machine présente un certain nombre d'inconvénients. Par exemple dans le cas d'un disjoncteur à boîtier moulé, la configuration des paramètres de protection doit en principe être réalisée par l'installateur au moment de l'installation. Cependant, la plupart du temps cette configuration est rarement effectuée par l'installateur ou pire encore elle n'est pas du tout effectuée par l'installateur. Lorsque la configuration est effectuée par l'installateur, il existe aussi des risques d'erreurs de paramétrages de l'interface homme machine. En effet, ce type d'interface homme machine mécanique présente le désavantage de nécessiter des réglages fins et de nécessiter l'usage d'outils.

Pour pallier au moins certains de ces inconvénients, il est par exemple connu du document DE202016102436U1 de proposer un disjoncteur avec un confort d'utilisation amélioré et qui permet d'effectuer des paramétrages en utilisant une technologie par communication en champ proche de type NFC. Plus particulièrement, dans cette solution le disjoncteur comprend un élément de commutation pouvant être déclenché par une unité de commande électronique pour déconnecter une ligne d'alimentation. Cette unité de commande est prévue pour déclencher l'élément de commutation en fonction des paramètres de commande A, B stockés dans l'unité de commande. Cette unité de commande est en outre couplée à un premier émetteur-récepteur qui peut être couplé sans fil avec un élément de commande de type smartphone. Les paramètres de commande A, B peuvent être configurés avec l'élément de commande. Le premier émetteur-récepteur est un émetteur-récepteur de communication en champ proche de type NFC appelé module NFC. Ainsi, dans cette solution il est possible en plus de l'interface homme machine ou en remplacement de celle-ci d'effectuer des paramétrages de l'unité de commande par communication en champ proche via la technologie NFC. Par exemple, les paramètres de fonctionnement B et les valeurs de seuil de déclenchement A sont paramétrables en cours de fonctionnement via l'écran tactile du smartphone par simple effleurement manuel et actionnement à l'aide du programme de commande du smartphone. Les valeurs modifiées sont renvoyées à l'unité de commande avec le signal de commande C1, C1', où elles sont stockées par le programme d'évaluation en tant que nouvelles valeurs réelles pour les valeurs de seuil de déclenchement A et les paramètres de fonctionnement B.

Cette solution présente l'inconvénient majeur que pour permettre le paramétrage du disjoncteur ou pour accéder à son historique, il est absolument nécessaire que celui-ci soit en fonctionnement et notamment que l'unité de commande soit alimentée par exemple par le réseau électrique.

La présente invention a pour but de pallier au moins un de ces inconvénients et de proposer une solution permettant une communication en champ proche de type NFC même lorsque l'appareillage électrique configurable n'est pas alimenté par exemple par le réseau électrique pour effectuer notamment le paramétrage et/ou le diagnostic de l'appareillage électrique configurable et/ou l'affectation de l'appareillage électrique configurable dans un tableau électrique.

A cet effet, l'invention concerne un appareillage électrique configurable par communication en champ proche comprenant :
- un boîtier,
- au moins une ligne électrique agencée pour être raccordée au réseau électrique,
- une unité de contrôle électronique configurée pour être alimentée par le réseau électrique pour piloter une fonction de déclenchement ou pour piloter une fonction de mesure du temps ou pour piloter une fonction de communication à partir d'au moins un ensemble de paramètres de réglages,
- un premier module de communication en champ proche comprenant au moins un organe d'émission/réception d'ondes électromagnétiques agencé pour communiquer par ondes électromagnétiques avec une unité de commande distante comprenant au moins un deuxième module de communication en champ proche,

ledit appareillage électrique configurable est caractérisé :
en ce que le premier module de communication en champ proche comprend en outre au moins une mémoire non volatile configurée pour stocker au moins ledit au moins un ensemble de paramètres de réglages et/ou un ensemble de données représentatif des caractéristiques de l'appareillage électrique configurable et/ou un ensemble de données représentatif de l'historique de fonctionnement de l'appareillage électrique configurable, ladite au moins une mémoire non volatile étant reliée électriquement audit au moins un organe d'émission/réception d'ondes électromagnétiques, et
en ce que le premier module de communication en champ proche est agencé pour être alimenté en énergie au moins par le champ électromagnétique du deuxième module de communication en champ proche de l'unité de commande distante en l'absence d'alimentation directe de ladite au moins une mémoire non volatile de préférence par le réseau électrique ou par une source auxiliaire.

L'invention concerne une installation de configuration et/ou de diagnostic et/ou de surveillance dudit au moins un appareillage électrique configurable comprenant ledit au moins un appareillage électrique configurable et l'unité de commande distante, caractérisée en ce que ledit au moins un appareillage électrique configurable est selon l'invention.

L'invention concerne un procédé d'identification de l'appareillage électrique configurable selon l'invention dans ladite installation selon l'invention, comprenant au moins :
- une étape d'identification de l'appareillage électrique configurable, lors de laquelle au moins une donnée parmi ledit ensemble de données représentatif des caractéristiques de l'appareillage électrique configurable stocké dans ladite au moins une mémoire non volatile est lue par ladite unité de commande distante par communication en champ proche.

L'invention concerne un procédé de configuration de l'appareillage électrique configurable selon l'invention dans ladite installation selon l'invention, comprenant au moins :
- une étape de configuration de l'appareillage électrique configurable, lors de laquelle au moins une donnée parmi ledit ensemble de paramètres de réglages est stockée dans ladite au moins une mémoire non volatile par ladite unité de commande distante par communication en champ proche.

L'invention concerne un procédé de surveillance de l'appareillage électrique configurable selon l'invention dans ladite installation selon l'invention, comprenant au moins :
- une étape d'installation de l'appareillage électrique configurable, lors de laquelle l'appareillage électrique configurable est installé dans un tableau électrique et est alimenté en électricité par le réseau électrique,
- une étape de surveillance en temps réel de l'appareillage électrique configurable, lors de laquelle au moins une donnée parmi l'ensemble de données représentatif de l'état de fonctionnement de l'appareillage électrique configurable est communiquée par ladite unité de contrôle électronique et est lue par ladite unité de commande distante par communication en champ proche en utilisant ladite au moins une mémoire non volatile comme passerelle.

L'invention concerne un procédé de diagnostic de l'appareillage électrique configurable selon l'invention dans ladite installation selon l'invention, comprenant au moins :
- une étape de diagnostic de l'appareillage électrique configurable, lors de laquelle au moins une donnée parmi l'ensemble de données représentatif de l'historique de fonctionnement de l'appareillage électrique configurable stocké dans ladite au moins une mémoire non volatile est lue par ladite unité de commande distante par communication en champ proche.

L'invention concerne un procédé de diagnostic après déclenchement de l'appareillage électrique configurable de protection de type disjoncteur selon l'invention dans ladite installation selon l'invention, comprenant au moins :
- une étape d'installation de l'appareillage électrique configurable de type disjoncteur, lors de laquelle l'appareillage électrique configurable est installé dans un tableau électrique, suivie postérieurement par
- une étape de déclenchement de l'appareillage électrique configurable de type disjoncteur, lors de laquelle l'appareillage électrique configurable est déclenché et n'est plus alimenté en électricité par le réseau électrique, suivie postérieurement par
- une première étape de diagnostic de l'appareillage électrique configurable après déclenchement, lors de laquelle au moins une donnée parmi un ensemble de données représentatif de l'historique de déclenchement de l'appareillage électrique configurable stocké dans ladite au moins une mémoire non volatile est lue par ladite unité de commande distante par communication en champ proche, et/ou,
- une deuxième étape de diagnostic de l'appareillage électrique configurable après déclenchement, lors de laquelle au moins une donnée parmi l'ensemble de données représentatif de l'historique de fonctionnement de l'appareillage électrique configurable stocké dans ladite au moins une mémoire non volatile est lue par ladite unité de commande distante par communication en champ proche.

L'invention concerne un procédé d'affectation dans un tableau électrique d'au moins deux appareillages électriques configurables selon l'invention dans ladite installation selon l'invention, comprenant :
- une étape de mise à disposition d'au moins deux appareillages électriques configurables, à savoir au moins un premier appareillage électrique configurable et un deuxième appareillage électrique configurable, lors de laquelle au moins le premier appareillage électrique configurable et le deuxième appareillage électrique configurable sont mis à disposition sans être installés dans le tableau électrique,
- une étape de récupération d'un ensemble de paramètres relatifs à la topologie de l'installation électrique, lors de laquelle un ensemble de paramètres relatifs à la topologie de l'installation électrique à réaliser est récupéré par une connexion de l'unité de commande distante à un serveur distant,
- une étape d'identification de l'appareillage électrique configurable, lors de laquelle au moins une donnée d'identification parmi ledit ensemble de données représentatif des caractéristiques du premier appareillage électrique configurable stocké dans ladite au moins une mémoire non volatile est lue par ladite unité de commande distante par communication en champ proche en absence d'alimentation directe de ladite au moins une mémoire non volatile, successivement
- une étape de recherche, lors de laquelle une première position prédéterminée du premier appareillage électrique configurable est recherchée parmi l'ensemble de paramètres relatifs à la topologie de l'installation électrique à réaliser par l'unité de commande distante en fonction de ladite au moins une donnée d'identification,
- une étape d'affectation, lors de laquelle l'unité de commande distante affecte à ladite au moins une donnée d'identification du premier appareillage électrique configurable la première position prédéterminée dans le tableau électrique,
- une étape d'installation dans le tableau électrique, lors de laquelle le premier appareillage électrique configurable est installé dans le tableau électrique à la première position prédéterminée,
- la réitération des étapes d'identification de l'appareillage électrique configurable, de recherche, d'affectation et d'installation pour au moins le deuxième appareillage électrique.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente un schéma illustrant l'installation de configuration et/ou de diagnostic et/ou de surveillance selon l'invention incluant un appareillage électrique configurable par communication en champ proche dans le cas où la mémoire non volatile et l'unité de contrôle électronique sont deux entités distinctes selon l'invention et une unité de commande distante,
[Fig. 2] la figure 2 représente un schéma illustrant l'installation de configuration et/ou de diagnostic et/ou de surveillance selon l'invention incluant un appareillage électrique configurable par communication en champ proche dans le cas où la mémoire non volatile et l'unité de contrôle électronique sont réunies dans une même entité selon l'invention et une unité de commande distante,
[Fig. 3] la figure 3 représente un schéma illustrant l'installation selon l'invention incluant l'appareillage électrique configurable par communication en champ proche selon l'invention, l'unité de commande distante, et un serveur distant,
[Fig. 4] la figure 4 représente un schéma bloc d'un procédé de découverte de l'appareillage électrique configurable par communication en champ proche selon l'invention,
[Fig. 5] la figure 5 représente un schéma bloc d'un procédé d'identification de l'appareillage électrique configurable selon l'invention,
[Fig. 6] la figure 6 représente un schéma bloc d'un procédé d'affectation dans un tableau électrique d'au moins deux appareillages électriques configurables selon l'invention,
[Fig. 7] la figure 7 représente un schéma bloc d'un procédé de configuration de l'appareillage électrique configurable selon une première variante de l'invention,
[Fig. 8] la figure 8 représente un schéma bloc d'un procédé de configuration de l'appareillage électrique configurable selon une deuxième variante de l'invention,
[Fig. 9] la figure 9 représente un schéma bloc d'un procédé de surveillance de l'appareillage électrique configurable selon l'invention et d'un procédé de diagnostic de l'appareillage électrique configurable selon l'invention, et
[Fig. 10] la figure 10 représente un schéma bloc d'un procédé de diagnostic après déclenchement de l'appareillage électrique configurable de protection de type disjoncteur selon l'invention.

Un appareillage électrique configurable 1 par communication en champ proche comprend :
- un boîtier 2,
- au moins une ligne électrique 3 agencée pour être raccordée au réseau électrique,
- une unité de contrôle électronique 4 configurée pour être alimentée par le réseau électrique pour piloter une fonction de déclenchement ou pour piloter une fonction de mesure du temps ou pour piloter une fonction de communication à partir d'au moins un ensemble de paramètres de réglages,
- un premier module de communication en champ proche 5 comprenant au moins un organe d'émission/réception d'ondes électromagnétiques 6 agencé pour communiquer par ondes électromagnétiques avec une unité de commande distante 7 comprenant au moins un deuxième module de communication en champ proche 8.

Conformément à l'invention, ledit appareillage électrique configurable 1 est caractérisé :
en ce que le premier module de communication en champ proche 5 comprend en outre au moins une mémoire non volatile 9 configurée pour stocker au moins ledit au moins un ensemble de paramètres de réglages et/ou un ensemble de données représentatif des caractéristiques de l'appareillage électrique configurable 1 et/ou un ensemble de données représentatif de l'historique de fonctionnement de l'appareillage électrique configurable 1, ladite au moins une mémoire non volatile 9 étant reliée électriquement audit au moins un organe d'émission/réception d'ondes électromagnétiques 6, et
en ce que le premier module de communication en champ proche 5 est agencé pour être alimenté en énergie au moins par le champ électromagnétique du deuxième module de communication en champ proche 8 de l'unité de commande distante 7 en l'absence d'alimentation directe de ladite au moins une mémoire non volatile 9 de préférence par le réseau électrique ou une source auxiliaire.

Avantageusement, la mémorisation au moins dudit au moins un ensemble de paramètres de réglages et/ou dudit ensemble de données représentatif des caractéristiques de l'appareillage électrique configurable 1 et/ou dudit ensemble de données représentatif de l'historique de fonctionnement de l'appareillage électrique configurable 1 est effectuée dans ladite au moins une mémoire non volatile 9. Par conséquent, le contenu de ladite au moins une mémoire non volatile 9 peut être lu ou modifié même lorsque l'appareillage électrique configurable 1 n'est pas alimenté en électricité par exemple par le réseau électrique ou une source auxiliaire et donc que ladite au moins une mémoire non volatile 9 n'est pas alimentée par le réseau électrique ou une source auxiliaire. En effet, en l'absence d'alimentation de l'appareillage électrique configurable 1 ladite au moins une mémoire non volatile 9 est apte et destinée à être alimentée en énergie indirectement et sans contact par ladite unité de commande distante 7 via le couplage du deuxième module de communication en champ proche 8 et du premier module de communication en champ proche 5 et peut donc fonctionner. En effet, le deuxième module de communication en champ proche 8 permet la communication et l'alimentation du premier module de communication en champ proche 5.

Dans cette configuration avantageuse, il est donc notamment possible en l'absence d'alimentation électrique de l'appareillage électrique configurable 1 par le réseau électrique ou une source auxiliaire :
- de stocker dans ladite au moins une mémoire non volatile 9 ledit ensemble de paramètres de réglages,
- de lire dans ladite au moins une mémoire non volatile 9 ledit ensemble de paramètres de réglages,
- de lire dans ladite au moins une mémoire non volatile 9 ledit ensemble de données représentatif des caractéristiques de l'appareillage électrique configurable 1,
- de lire dans ladite au moins une mémoire non volatile 9 ledit ensemble de données représentatif de l'historique de fonctionnement de l'appareillage électrique configurable 1.

Ceci est particulièrement avantageux car ces opérations étaient habituellement uniquement possibles à condition que l'appareillage électrique configurable 1 soit alimenté en électricité par exemple par le réseau électrique. Il en résulte qu'il est notamment avantageusement possible d'effectuer une identification, une configuration et/ou un diagnostic, une affectation dans un tableau de l'appareillage électrique configurable 1, sans avoir la nécessité d'alimenter en électricité l'appareillage électrique configurable 1, mais à distance par communication en champ proche. Enfin, cette configuration permet de substituer en tout ou en partie l'interface homme machine mécanique connue de l'art antérieur. Par conséquent, il en résulte une réduction du nombre de composants électroniques qui aurait été nécessaire si une interface homme machine mécanique avait été employée, et donc une réduction des coûts et une facilité d'utilisation car plus aucun outil ou câble n'est nécessaire.

De préférence, le fonctionnement de ladite au moins une mémoire non volatile 9 est indépendant de l'alimentation de ladite unité de contrôle électronique 4 en l'absence d'alimentation directe de ladite au moins une mémoire non volatile 9 de préférence par le réseau électrique ou par une source auxiliaire, ladite au moins une mémoire non volatile 9 étant une entité disjointe de ladite unité de contrôle électronique 4 ou étant une entité adjointe à ladite unité de contrôle électronique 4.

Avantageusement, ladite au moins une mémoire non volatile 9 peut être une entité distincte de l'unité de contrôle électronique 4. Dans ce cas par exemple la mémoire non volatile 9 et l'unité de contrôle électronique 4 sont formées par deux composants électroniques distincts. Avantageusement, cette solution préférée permet de pouvoir choisir la taille de mémoire non volatile 9 et donc d'optimiser le coût de la solution. Alternativement, ladite au moins une mémoire non volatile 9 peut être une entité rapportée à l'unité de contrôle électronique 4. Dans ce cas alternatif par exemple la mémoire non volatile 9 et l'unité de contrôle électronique 4 sont regroupées dans un seul composant électronique. Dans tous les cas, en absence d'alimentation directe de ladite au moins une mémoire non volatile 9, celle-ci peut être alimentée par communication en champ proche.

De préférence, ladite au moins une mémoire non volatile 9 est reliée électriquement à l'unité de contrôle électronique 4 en outre pour alimenter directement en électricité le premier module de communication en champ proche 5 de préférence par le réseau électrique ou la source auxiliaire en présence d'une alimentation directe par le réseau électrique ou la source auxiliaire de l'appareillage électrique configurable 1.

Avantageusement, dans cette configuration ladite au moins une mémoire non volatile 9 est apte et destinée à être alimentée indirectement par ladite unité de commande distante 7 par communication en champ proche mais aussi est apte et destinée à être alimentée directement par l'unité de contrôle électronique 4 si l'appareillage électrique configurable 1 est alimenté en électricité par exemple par le réseau électrique. Dans cette configuration avantageuse, il est donc notamment possible en présence d'alimentation de l'appareillage électrique configurable 1 :
- de stocker dans ladite au moins une mémoire non volatile 9 au moins une donnée parmi ledit ensemble de paramètres de réglages,
- de lire dans ladite au moins une mémoire non volatile 9 ledit ensemble de paramètres de réglages,
- de lire dans ladite au moins une mémoire non volatile 9 au moins une donnée parmi ledit ensemble de données représentatif des caractéristiques de l'appareillage électrique configurable 1,
- de lire dans ladite au moins une mémoire non volatile 9 au moins une donnée parmi ledit ensemble de données représentatif de l'historique de fonctionnement de l'appareillage électrique configurable 1.

De préférence, ladite au moins une mémoire non volatile 9 est reliée électriquement à l'unité de contrôle électronique 4 au moins pour donner accès à l'unité de contrôle électronique 4 au moins audit un ensemble de paramètres de réglages stocké dans ladite au moins une mémoire non volatile 9.

Avantageusement, si l'appareillage électrique configurable 1 est alimenté en électricité par exemple par le réseau électrique ou par une source auxiliaire alors il est donc notamment possible de donner accès à l'unité de contrôle électronique 4 au moins audit ensemble de paramètres de réglages stocké dans ladite au moins une mémoire non volatile 9.

De préférence, ladite au moins une mémoire non volatile 9 est reliée électriquement à l'unité de contrôle électronique 4 au moins pour transmettre de l'unité de contrôle électronique 4 vers ladite au moins une mémoire non volatile 9 au moins un signal électrique représentatif de l'historique de fonctionnement de l'appareillage électrique configurable 1 pour stocker ledit ensemble de données représentatif de l'historique de fonctionnement de l'appareillage électrique configurable 1 dans ladite au moins une mémoire non volatile 9.

Avantageusement, si l'appareillage électrique configurable 1 est alimenté en électricité par exemple par le réseau électrique alors il est donc notamment possible de stocker dans ladite au moins une mémoire non volatile 9 ledit ensemble de données représentatif de l'historique de fonctionnement de l'appareillage électrique configurable 1.

De préférence, ladite au moins une mémoire non volatile 9 est reliée électriquement à l'unité de contrôle électronique 4 et ladite au moins une mémoire non volatile 9 est apte et destinée à fonctionner comme une passerelle pour donner accès à un ensemble de données représentatif de l'état de fonctionnement de l'appareillage électrique configurable 1 communicable par l'unité de contrôle électronique 4.

Avantageusement, si l'appareillage électrique configurable 1 est alimenté en électricité par exemple par le réseau électrique alors il est donc notamment possible d'utiliser ladite au moins une mémoire non volatile 9 comme une passerelle pour donner accès à l'état de fonctionnement de l'appareillage électrique configurable 1 via ledit ensemble de données représentatif de l'état de fonctionnement de l'appareillage électrique configurable 1 communiqué par l'unité de contrôle électronique 4. On entend par passerelle le fait que ladite au moins une mémoire non volatile 9 permet une fonction de communication à travers elle. A cet effet, dans ce cas, ladite au moins une mémoire non volatile 9 en plus d'être configurée pour effectuer la fonction de mémoire non volatile et la fonction de protocole radio NFC, est configurée pour effectuer de préférence une fonction supplémentaire de passerelle.

De préférence, le boîtier 2 comprend une face avant 10 comprenant une zone de couplage 11 située dans le champ dudit au moins un organe d'émission/réception d'ondes électromagnétiques 6 du premier module de communication en champ proche 5 et ladite zone de couplage 11 est identifiable de l'extérieur de la face avant 10 de préférence par au moins un repère.

Avantageusement, cette configuration permet de faciliter le couplage en champ proche entre l'unité de commande distante 7 et ledit appareillage électrique configurable 1 par une identification qui est de préférence visuelle.

De préférence, la zone de couplage 11 peut être recouverte par un couvercle 12 comportant au moins un organe de blocage d'ondes électromagnétiques.

Avantageusement, cette configuration permet d'empêcher temporairement le couplage en champ proche entre l'unité de commande distante 7 et ledit appareillage électrique configurable 1 lorsque le couvercle 12 recouvre la zone de couplage 11. De manière optionnelle, le couvercle 12 peut être solidarisé à la face avant 10 à l'aide d'un plombage. Cette configuration permet de sécuriser encore davantage l'accès à ladite au moins une mémoire non volatile 9.

De manière facultative, il est possible d'interdire l'accès en champ proche par la configuration de la mémoire non volatile 9, configuration envoyée par une communication en champ proche. Aussi pour réactiver la fonction de couplage en champ proche, il faut utiliser un autre médium de communication.

De préférence, ladite au moins une mémoire non volatile 9 est une mémoire EEPROM.

La mémoire EEPROM est une mémoire de type non volatile, utilisée dans les composants de communication en champ proche. De manière alternative, la mémoire EEPROM peut être remplacée par une mémoire FLASH ou une mémoire NVRAM, par exemple FRAM.

De préférence, ledit appareillage électrique configurable 1 comprend une unique mémoire non volatile 9.

Avantageusement, cette configuration permet de limiter le nombre de composants électroniques. Le choix d'une unique mémoire non volatile 9 a l'avantage de permettre le stockage au moins dudit au moins un ensemble de paramètres de réglages et/ou dudit ensemble de données représentatif des caractéristiques de l'appareillage électrique configurable 1 et/ou dudit ensemble de données représentatif de l'historique de fonctionnement de l'appareillage électrique configurable 1 en un seul endroit et d'éviter la duplication de ces données.

De préférence, l'unité de contrôle électronique 4 comprend un microcontrôleur.

De préférence et si ladite au moins une mémoire non volatile 9 est une entité disjointe de l'unité de contrôle électronique 4 alors, le microcontrôleur est dépourvu de mémoire non volatile propre qui soit configurée pour stocker au moins ledit au moins un ensemble de paramètres de réglages et/ou ledit ensemble de données représentatif des caractéristiques de l'appareillage électrique configurable 1 et/ou ledit ensemble de données représentatif de l'historique de fonctionnement de l'appareillage électrique configurable 1.

De manière alternative et si ladite au moins une mémoire non volatile 9 est adjointe à l'unité de contrôle électronique 4 alors, le microcontrôleur est pourvu d'une mémoire non volatile 9 propre ou est associé à la mémoire non volatile 9 qui est configurée pour stocker au moins ledit au moins un ensemble de paramètres de réglages et/ou ledit ensemble de données représentatif des caractéristiques de l'appareillage électrique configurable 1 et/ou ledit ensemble de données représentatif de l'historique de fonctionnement de l'appareillage électrique configurable 1.

De préférence, l'appareillage électrique configurable 1 est un appareillage électrique configurable de protection de type disjoncteur comprenant une unité de coupure 13 électromécanique ou électronique pour couper ladite au moins une ligne électrique 3 en cas de défaut détecté par l'unité de contrôle électronique 4. L'unité de coupure 13 peut être soit électromécanique, soit électronique. Dans le cas d'une unité de coupure 13 électromécanique, l'appareillage électrique configurable 1 comprend en outre un actionneur 14 piloté par l'unité de contrôle électronique 4 pour déclencher l'unité de coupure 13 électromécanique en cas de défaut. Dans le cas d'une coupure électronique et donc d'un appareillage de protection à coupure électronique, une unité de coupure 13 électronique comprend au moins un composant électronique de coupure de puissance disposé sur au moins une ligne de courant de phase. Ledit au moins un composant électronique de coupure de puissance 6 comprend au moins un transistor de puissance et préférentiellement au moins un MOSFET et/ou un JFET et/ou un IGBT.

De préférence, l'appareillage électrique configurable 1 est un appareillage de protection à coupure électronique. L'appareillage de protection à coupure électronique peut être modulaire et être par exemple un disjoncteur modulaire statique du type SCCB (Semi Conductor Circuit Breaker) ou un disjoncteur différentiel modulaire statique SC-RCBO (Semi Conductor Residual current Circuit Breaker with Overload).

L'invention concerne également une installation de configuration et/ou de diagnostic et/ou de surveillance dudit au moins un appareillage électrique configurable 1 comprenant ledit au moins un appareillage électrique configurable 1 et l'unité de commande distante 7.

Conformément à l'invention ladite installation est caractérisée en ce que ledit au moins un appareillage électrique configurable 1 est selon l'invention et tel que décrit précédemment.

De préférence, ladite installation comprend en outre au moins un serveur distant 15 configuré pour communiquer à distance avec ladite unité de commande distante 7.

Avantageusement, les données d'installation et/ou de configuration peuvent être accessibles et téléchargeables à distance à partir du serveur distant 15 au lieu d'être stockées dans ladite unité de commande distante 7. De manière alternative, les données d'installation et/ou de configuration peuvent ne pas être téléchargées à distance à partir du serveur distant 15 mais être stockées dans ladite unité de commande distante 7, dans ce cas l'installation peut être dépourvue de serveur distant 15 ou en être déconnectée.

De préférence, ladite installation comprend en outre au moins une imprimante (non représentée) connectée à l'unité de commande distante 7.

L'invention concerne également un procédé d'identification de l'appareillage électrique configurable 1 selon l'invention dans ladite installation selon l'invention, comprenant au moins :
- une étape d'identification de l'appareillage électrique configurable 101, lors de laquelle au moins une donnée parmi ledit ensemble de données représentatif des caractéristiques de l'appareillage électrique configurable 1 stocké dans ladite au moins une mémoire non volatile 9 est lue par ladite unité de commande distante 7 par communication en champ proche.

Avantageusement, ce procédé permet la lecture par ladite unité de commande distante 7 via communication en champ proche d'au moins une donnée parmi ledit ensemble de données représentatif des caractéristiques de l'appareillage électrique configurable 1 dans ladite au moins une mémoire non volatile 9. L'identification de l'appareillage électrique configurable 1 peut être réalisée aussi bien si l'appareillage électrique configurable 1 est alimenté ou non par le réseau électrique à l'aide de ladite unité de commande distante 7 via communication en champ proche avec le premier module de communication en champ proche 5.

L'invention concerne également un procédé de configuration de l'appareillage électrique configurable 1 selon l'invention dans ladite installation selon l'invention, comprenant au moins :
- une étape de configuration de l'appareillage électrique configurable 204, 304, lors de laquelle au moins une donnée parmi ledit ensemble de paramètres de réglages est stocké dans ladite au moins une mémoire non volatile 9 par ladite unité de commande distante 7 par communication en champ proche.

Avantageusement, ce procédé permet l'écriture par ladite unité de commande distante 7 via communication en champ proche d'au moins une donnée parmi ledit ensemble de paramètres de réglages dans ladite au moins une mémoire non volatile 9. La configuration de l'appareillage électrique configurable 1 peut être réalisée aussi bien si l'appareillage électrique configurable 1 est alimenté ou non par le réseau électrique à l'aide de ladite unité de commande distante 7 via communication en champ proche avec le premier module de communication en champ proche 5.

L'invention concerne également un procédé de surveillance de l'appareillage électrique configurable 1 selon l'invention dans ladite installation selon l'invention, comprenant au moins :
- une étape d'installation de l'appareillage électrique configurable 1, lors de laquelle l'appareillage électrique configurable 1 est installé dans un tableau électrique et est alimenté en électricité par le réseau électrique,
- une étape de surveillance en temps réel de l'appareillage électrique configurable 401, lors de laquelle au moins une donnée parmi l'ensemble de données représentatif de l'état de fonctionnement de l'appareillage électrique configurable 1 est communiquée par ladite unité de contrôle électronique 4 et est lue par ladite unité de commande distante 7 par communication en champ proche en utilisant ladite au moins une mémoire non volatile 9 comme passerelle.

Avantageusement, ce procédé permet la lecture par ladite unité de commande distante 7 via communication en champ proche d'au moins une donnée parmi l'ensemble de données représentatif de l'état de fonctionnement de l'appareillage électrique configurable 1 dans ladite unité de contrôle électronique 4 en utilisant ladite au moins une mémoire non volatile 9 comme passerelle. L'ensemble de données représentatif de l'état de fonctionnement de l'appareillage électrique configurable 1 n'est pas stocké dans ladite au moins une mémoire non volatile 9. La surveillance en temps réel de l'appareillage électrique configurable 1 peut être réalisée si et seulement si l'appareillage électrique configurable 1 est alimenté par le réseau électrique et à l'aide de ladite unité de commande distante 7 via communication en champ proche avec le premier module de communication en champ proche 5.

L'invention concerne également un procédé de diagnostic de l'appareillage électrique configurable 1 selon l'invention dans ladite installation selon l'invention, comprenant au moins :
- une étape de diagnostic de l'appareillage électrique configurable 402, lors de laquelle au moins une donnée parmi l'ensemble de données représentatif de l'historique de fonctionnement de l'appareillage électrique configurable 1 stocké dans ladite au moins une mémoire non volatile 9 est lue par ladite unité de commande distante 7 par communication en champ proche.

Avantageusement, ce procédé permet la lecture par ladite unité de commande distante 7 via communication en champ proche d'au moins une donnée parmi l'ensemble de données représentatif de l'historique de fonctionnement de l'appareillage électrique configurable 1 dans ladite au moins une mémoire non volatile 9. Le diagnostic de l'appareillage électrique configurable 1 peut être réalisé aussi bien si l'appareillage électrique configurable 1 est alimenté ou non par le réseau électrique à l'aide de ladite unité de commande distante 7 via communication en champ proche avec le premier module de communication en champ proche 5.

L'invention concerne également un procédé de diagnostic après déclenchement de l'appareillage électrique configurable 1 de protection de type disjoncteur selon l'invention dans ladite installation selon l'invention, comprenant au moins :
- une étape d'installation de l'appareillage électrique configurable 1 de type disjoncteur, lors de laquelle l'appareillage électrique configurable 1 est installé dans un tableau électrique, suivie postérieurement par
- une étape de déclenchement de l'appareillage électrique configurable de type disjoncteur 501, lors de laquelle l'appareillage électrique configurable 1 est déclenché et n'est plus alimenté en électricité par le réseau électrique, suivie postérieurement par
- une première étape de diagnostic de l'appareillage électrique configurable après déclenchement 502, lors de laquelle au moins une donnée parmi un ensemble de données représentatif de l'historique de déclenchement de l'appareillage électrique configurable 1 stocké dans ladite au moins une mémoire non volatile 9 est lue par ladite unité de commande distante 7 par communication en champ proche, et/ou,
- une deuxième étape de diagnostic de l'appareillage électrique configurable après déclenchement 503, lors de laquelle au moins une donnée parmi l'ensemble de données représentatif de l'historique de fonctionnement de l'appareillage électrique configurable 1 stocké dans ladite au moins une mémoire non volatile 9 est lue par ladite unité de commande distante 7 par communication en champ proche.

Avantageusement, ce procédé permet la lecture par ladite unité de commande distante 7 via communication en champ proche d'au moins une donnée parmi l'ensemble de données représentatif de l'historique de fonctionnement de l'appareillage électrique configurable 1 et/ou parmi un ensemble de données représentatif de l'historique de déclenchement de l'appareillage électrique configurable 1 dans ladite au moins une mémoire non volatile 9. Le diagnostic après déclenchement de l'appareillage électrique configurable 1 de type disjoncteur peut être réalisé si l'appareillage électrique configurable 1 n'est pas alimenté par le réseau électrique à l'aide de ladite unité de commande distante 7 via communication en champ proche avec le premier module de communication en champ proche 5.

L'invention concerne également un procédé d'affectation dans un tableau électrique d'au moins deux appareillages électriques configurables selon l'invention, dans ladite installation selon l'invention, comprenant :
- une étape de mise à disposition d'au moins deux appareillages électriques configurables, à savoir au moins un premier appareillage électrique configurable 1 et un deuxième appareillage électrique configurable 1, lors de laquelle au moins le premier appareillage électrique configurable 1 et le deuxième appareillage électrique configurable 1 sont mis à disposition sans être installés dans le tableau électrique,
- une étape de récupération d'un ensemble de paramètres relatifs à la topologie de l'installation électrique 111, lors de laquelle un ensemble de paramètres relatifs à la topologie de l'installation électrique à réaliser est récupéré par une connexion de l'unité de commande distante 7 à un serveur distant 15,
- une étape d'identification de l'appareillage électrique configurable 112, lors de laquelle au moins une donnée d'identification parmi ledit ensemble de données représentatif des caractéristiques du premier appareillage électrique configurable 1 stocké dans ladite au moins une mémoire non volatile 9 est lue par ladite unité de commande distante 7 par communication en champ proche en absence d'alimentation directe de ladite au moins une mémoire non volatile 9, successivement

- une étape de recherche 113, lors de laquelle une première position prédéterminée du premier appareillage électrique configurable 1 est recherchée parmi l'ensemble de paramètres relatifs à la topologie de l'installation électrique à réaliser par l'unité de commande distante 7 en fonction de ladite au moins une donnée d'identification,
- une étape d'affectation 114, lors de laquelle l'unité de commande distante 7 affecte à ladite au moins une donnée d'identification du premier appareillage électrique configurable 1 la première position prédéterminée dans le tableau électrique,
- une étape d'installation 117 dans le tableau électrique, lors de laquelle le premier appareillage électrique configurable 1 est installé dans le tableau électrique à la première position prédéterminée,
- la réitération 118 des étapes d'identification de l'appareillage électrique configurable 112, de recherche 113, d'affectation 114 et d'installation 117 pour au moins le deuxième appareillage électrique 1.

Avantageusement, ce procédé d'affectation permet à l'installateur de savoir à quelles positions du tableau électrique une pluralité d'appareillages électriques configurables 1 doit être installée. L'ensemble des étapes de ce procédé d'affectation peut être réalisé sans l'alimentation électrique du réseau électrique ou de la source auxiliaire car les appareillages électriques configurables 1 peuvent être identifiés sans que les appareillages électriques configurables 1 soient alimentés par le réseau électrique ou une source auxiliaire. Ce procédé d'affectation peut être réalisé par un tableautier en dehors de toute opération de configuration et être alors suivi du procédé de configuration selon l'invention qui pourrait être réalisé par un autre opérateur. De manière alternative, ce procédé d'affectation peut inclure des étapes supplémentaires de configuration comme décrit ci-après.

De préférence, lors de l'étape de recherche 113, la première position prédéterminée est recherchée parmi les positions libres et donc non déjà affectées de l'ensemble de paramètres relatifs à la topologie de l'installation.

De préférence, l'appareillage électrique configurable 1 peut être un disjoncteur ou une horloge ou une minuterie ou un module de communication.

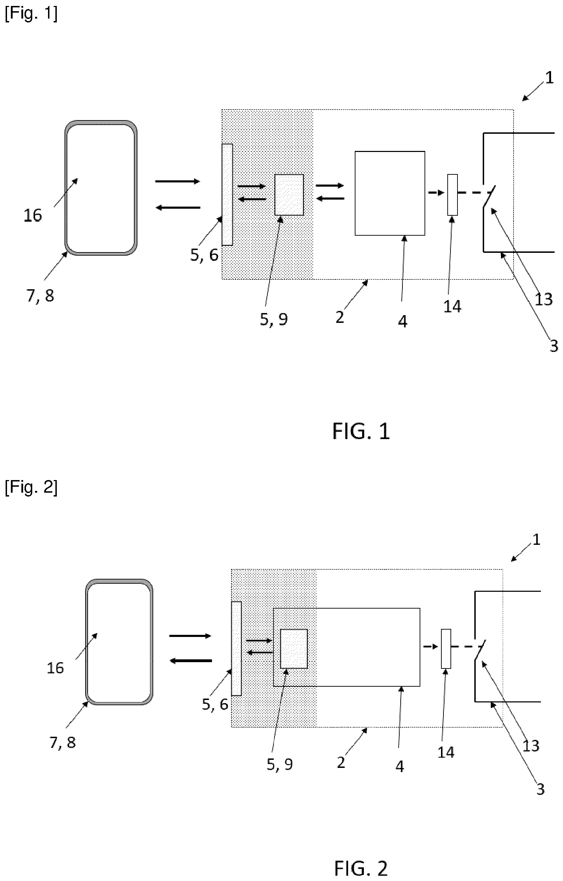

Si l'appareillage électrique configurable 1 est un disjoncteur comme l'illustrent les figures 1 à 3, alors l'unité de contrôle électronique 4 alimentée par le réseau électrique est prévue pour piloter la fonction de déclenchement à partir dudit ensemble de paramètres de réglages. Les paramètres de réglages sont de manière non exhaustive et non limitative choisis seul ou en combinaison parmi les courbes de protections de type surcharge, court-circuit retardé, court-circuit rapide, défauts à la terre, tant pour les valeurs des seuils en intensité que pour les valeurs de temporisation. En outre dans ce cas, le disjoncteur comprend également l'unité de coupure 13 et l'actionneur 14.

De préférence, le disjoncteur est un disjoncteur ouvert couramment désigné par l'acronyme ACB signifiant Air Circuit Breaker en anglais ou un disjoncteur à boîtier moulé couramment désigné par l'acronyme MCCB signifiant Molded Case Circuit Breaker en anglais ou un bloc différentiel additionnel couramment désigné par l'acronyme AOB signifiant Add On Block en anglais.

L'appareillage électrique configurable 1 peut aussi être un appareillage de protection à coupure électronique. Les paramètres de réglages sont de manière non exhaustive et non limitative choisis seuls ou en combinaison parmi le calibre nominal de l'appareillage électrique configurable 1, les seuils de fonctionnement de la courbe contre les surcharge et les court-circuits, les paramètres de la protection différentielle.

L'appareillage de protection à coupure électronique peut être modulaire et être par exemple un disjoncteur modulaire statique du type SCCB (Semi Conductor Circuit Breaker) ou un disjoncteur différentiel modulaire statique SC-RCBO (Semi Conductor Residual current Circuit Breaker with Overload).

Si l'appareillage électrique configurable 1 est une horloge ou une minuterie selon des exemples non représentés, alors l'unité de contrôle électronique 4 alimentée par le réseau électrique ou une alimentation auxiliaire est prévue pour piloter une fonction de mesure du temps à partir dudit ensemble de paramètres de réglages. Ces paramètres de réglages sont de manière non exhaustive et non limitative choisis seul ou en combinaison parmi des latitudes, des longitudes, des fuseaux horaires, la mise à l'heure de l'appareillage électrique configurable 1 et le réglage de temporisations notamment pour la minuterie.

Si l'appareillage électrique configurable 1 est un module de communication selon un exemple non représenté, alors l'unité de contrôle électronique 4 alimentée par le réseau électrique est prévue pour piloter une fonction de communication à partir dudit ensemble de paramètres de réglages. Ces paramètres de réglages sont de manière non exhaustive et non limitative choisis seul ou en combinaison parmi l'adresse logique de communication, ainsi que les paramètres de réglage de la communication : nombre de bit de stop et parité.

De préférence, l'appareillage électrique configurable 1 est agencé pour pouvoir être installé dans le tableau électrique (non représenté).

De préférence et comme l'illustre la figure 1 ou la figure 2, le boîtier 2 permet de contenir notamment la ligne électrique 3, l'unité de contrôle électronique 4, le premier module de communication en champ proche 5, l'organe d'émission/réception d'ondes électromagnétiques 6 et la mémoire non volatile 9. Dans le cas du disjoncteur illustré à la figure 1 ou à la figure 2, le boîtier 2 contient en plus l'unité de coupure 13 et l'actionneur 14.

De préférence, ladite au moins une ligne électrique 3 comprend au moins un conducteur électrique qui peut être alimenté par exemple par le réseau électrique.

De préférence, l'unité de contrôle électronique 4 est dépendante de la tension ou du courant circulant dans ladite au moins une ligne électrique 3 pour fonctionner.

L'unité de contrôle électronique 4 n'est en général pas configurée pour être alimentée en énergie par l'unité de commande distante 7 par communication en champ proche via le deuxième module de communication en champ proche 8 pour piloter la fonction de déclenchement ou pour piloter la fonction de mesure du temps ou pour piloter la fonction de communication à partir d'au moins un ensemble de paramètres de réglages.

Dans le cas où ladite au moins une mémoire non volatile 9 et l'unité de contrôle électronique 4 forment une seule entité par exemple sous la forme d'un seul composant électronique alors seule ladite au moins une mémoire non volatile 9 est configurée pour être alimentée en énergie par l'unité de commande distante 7 par communication en champ proche via le deuxième module de communication en champ proche 8.

De préférence, le premier module de communication en champ proche 5 permet d'émettre et de recevoir des ondes électromagnétiques en champ proche via la technologie en champ proche couramment appelée NFC. Le premier module de communication en champ proche 5 peut être alimenté soit indirectement et sans contact par l'unité de commande distante 7 par communication en champ proche ou directement par l'unité de contrôle électronique 4 si celle-ci est alimentée en électricité.

De préférence, l'organe d'émission/réception d'ondes électromagnétiques 6 comprend au moins une antenne.

La mémoire non volatile 9 peut être alimentée soit par l'unité de commande distante 7 par communication en champ proche ou par l'unité de contrôle électronique 4 si celle-ci est alimentée en électricité.

La mémoire non volatile 9 peut stocker des données et notamment des données en relation avec l'ensemble de paramètres de réglages, l'ensemble de données représentatif des caractéristiques de l'appareillage électrique configurable 1, l'ensemble de données représentatif de l'historique de fonctionnement de l'appareillage électrique configurable 1, l'ensemble de données représentatif de l'historique de déclenchement de l'appareillage électrique configurable 1.

La mémoire non volatile 9 peut se comporter comme une passerelle pour permettre à travers celle-ci la lecture par l'unité de commande distante 7 de l'état de fonctionnement de l'appareillage électrique configurable 1 en temps réel.

L'ensemble de paramètres de réglages peut comprendre seul ou en combinaison l'état actif, le courant, le temps respectivement pour la protection long retard, pour la protection court-circuit retardé, pour la protection instantanée, pour le court-circuit à la terre, pour la protection de neutre.

L'ensemble de données représentatif des caractéristiques de l'appareillage électrique configurable 1 peut comprendre seul ou en combinaison une marque, une gamme, un modèle, un nombre de pôles, le type d'électronique, le courant nominal, le pouvoir de coupure, les caractéristiques optionnelles.

L'ensemble de données représentatif de l'historique de fonctionnement de l'appareillage électrique configurable 1 peut comprendre seul ou en combinaison l'historique de paramétrage, l'historique d'alarmes, les compteurs de manoeuvres, les profils de courant, les profils de température, les compteurs de démarrage, la durée de fonctionnement.

L'ensemble de données représentatif de l'état de fonctionnement de l'appareillage électrique configurable 1 peut comprendre seul ou en combinaison le niveau de charge, l'état des alarmes, l'état des pré-alarmes, les mesures des grandeurs électriques telles que par exemple le courant, la tension, la fréquence, la puissance.

L'ensemble de données représentatif de l'historique de déclenchement de l'appareillage électrique configurable 1 peut comprendre seul ou en combinaison la source du déclenchement (type de courbe, pôle sur lequel le défaut est apparu), l'horodatage, la valeur de courant de déclenchement, la durée du défaut.

L'ensemble de paramètres relatifs à la topologie de l'installation électrique peut comprendre plusieurs positions dans le tableau électrique chacune associée à au moins une donnée d'identification d'un appareillage électrique configurable 1.

De préférence, l'unité de contrôle électronique 4 et le premier module de communication en champ proche 5 comprennent au moins une carte électronique (non représentée) comprenant au moins le microcontrôleur, ladite antenne et la mémoire non volatile 9.

De préférence, ladite au moins une carte électronique est un circuit imprimé de type PCB signifiant en anglais Printed Circuit Board avec des composants électroniques assemblés et qui comportent entre 2 et 6 couches et de préférence 2 couches afin de limiter l'usage de cuivre en tant que composant des couches.

L'unité de contrôle électronique 4 et le premier module de communication en champ proche 5 sont reliés électriquement de sorte que la mémoire non volatile 9 et l'unité de contrôle électronique 4 et plus particulièrement le microcontrôleur puissent échanger au moins un signal électrique.

L'unité de commande distante 7 est de préférence un smartphone ou une tablette ou un ordinateur portable. L'unité de commande distante 7 comprend de préférence un afficheur 16 par exemple un écran.

Le deuxième module de communication en champ proche 8 permet d'émettre et de recevoir des ondes électromagnétiques en champ proche via la technologie en champ proche couramment appelée NFC. Le deuxième module de communication en champ proche 8 et le premier module de communication en champ proche 5 peuvent échanger des signaux électromagnétiques à distance. Le deuxième module de communication en champ proche 8 peut alimenter le premier module de communication en champ proche 5.

De préférence, le couvercle 12 est monté pivotant sur la face avant 10. De préférence le couvercle 12 est dans un matériau plastique par exemple transparent ou translucide pour permettre de visualiser le repère même lorsque le couvercle 12 est fermé.

Le couvercle 12 est de préférence muni d'un écran métallique permettant de bloquer le rayonnement électro-magnétique.

Le repère peut comprendre un logo et/ou un sigle, par exemple le sigle « NFC » et/ou un QR code afin de renvoyer vers un site dédié afin d'accéder au téléchargement de l'application de préférence mobile.

L'organe de blocage d'ondes électromagnétiques est de préférence un écran métallique.

Le serveur distant 15 permet par exemple d'accéder aux résultats de la note de calcul de dimensionnement de l'installation électrique et plus particulièrement aux réglages à réaliser sur le disjoncteur, et de permettre son identification de manière certaine.

La figure 1 illustre un exemple d'installation selon l'invention qui comprend une seule unité de commande distante 7 de type smartphone et un seul appareillage électrique configurable 1 selon l'invention de type disjoncteur tel que décrit précédemment. Le smartphone est pourvu d'un afficheur 16 et peut communiquer avec le disjoncteur par communication en champ proche à l'aide du premier module de communication en champ proche 5 et du deuxième module de communication en champ proche 8 afin d'échanger des données et ce notamment même lorsque le disjoncteur n'est pas alimenté par le réseau électrique ou par une source auxiliaire, car dans ce cas le deuxième module de communication en champ proche 8 peut alimenter le premier module de communication en champ proche 5. Dans cet exemple, la mémoire non volatile 9 et l'unité de contrôle électronique 4 sont deux entités distinctes. La zone grisée illustre que seules l'organe d'émission/réception d'ondes électromagnétiques 6 et la mémoire non volatile 9 du premier module de communication en champ proche 5 peuvent être alimentés en énergie par communication en champ proche tandis que l'unité de contrôle électronique 4 peut seulement être alimentée par le réseau électrique ou la source auxiliaire. La mémoire non volatile 9 et l'unité de contrôle électronique 4 sont reliées électriquement et peuvent échanger des signaux électriques afin d'échanger des données lorsque le disjoncteur est alimenté en électricité par exemple par le réseau électrique. L'unité de contrôle électronique 4 permet de piloter l'actionneur 14 lorsque le disjoncteur est alimenté en électricité par exemple par le réseau électrique en cas de détection d'un défaut. En cas d'apparition d'un défaut sur la ligne électrique 3, l'actionneur 14 permet de déclencher l'unité de coupure 13 et d'interrompre la ligne électrique 3. En cas de défaut puis de déclenchement, l'unité de contrôle électronique 4 n'est plus alimentée en électricité par exemple par le réseau électrique. Alors, la seule possibilité d'accéder aux données stockées dans la mémoire non volatile 9 est d'alimenter le premier module de communication en champ proche 5 à l'aide du deuxième module de communication en champ proche 8 du smartphone.

La figure 2 diffère de la figure 1 seulement en ce que dans cet exemple alternatif, la mémoire non volatile 9 et l'unité de contrôle électronique 4 sont réunies.

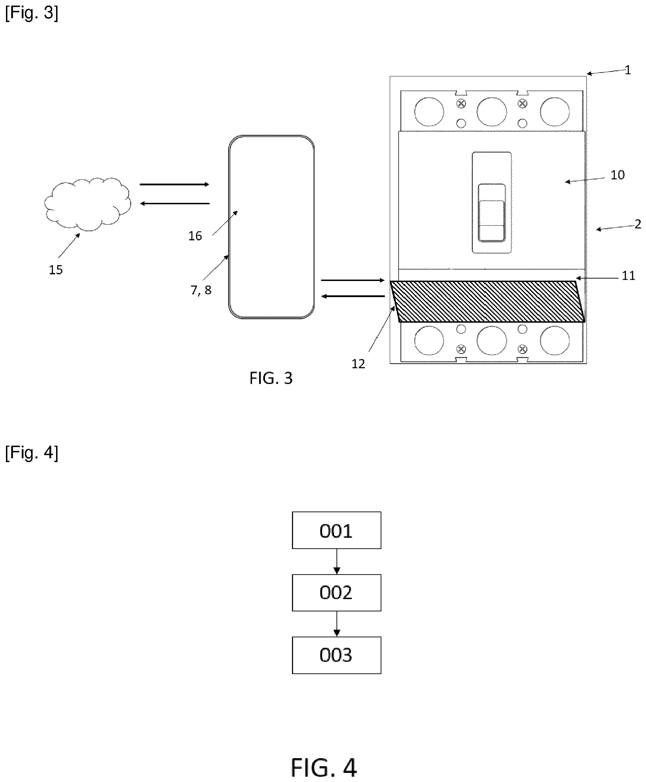

La figure 3 illustre un autre exemple d'installation selon l'invention qui comprend un seul serveur distant 15, une seule unité de commande distante 7 de type smartphone et un seul appareillage électrique configurable 1 selon l'invention de type disjoncteur. La face avant 10 du boîtier 2 comprend la zone de couplage 11 qui peut être recouverte par le couvercle 12. Le smartphone peut communiquer à distance avec le serveur distant 15 par exemple par Wifi ou le réseau mobile sans fil. Le smartphone peut communiquer avec le disjoncteur par communication en champ proche à l'aide du premier module de communication en champ proche 5 et du deuxième module de communication en champ proche 8 afin d'échanger des données et ce notamment même lorsque le disjoncteur n'est pas alimenté en électricité par exemple par le réseau électrique ou par une source auxiliaire.

La figure 4 illustre un exemple de procédé de découverte de l'appareillage électrique configurable par communication en champ proche selon l'invention.

Dans cet exemple illustré à la figure 4, le procédé de découverte comprend :
- une étape d'approche 001, lors de laquelle l'unité de commande distante 7, dont le deuxième module de communication en champ proche 8 est activé, est approchée de l'appareillage électrique configurable 1 de préférence au niveau de la zone de couplage 11 et préférentiellement à une distance inférieure à 5 centimètres, successivement,
- une étape de lecture 002, lors de laquelle la lecture d'un premier enregistrement dit NDEF, signifiant NFC data exchange format qui correspond au format standardisé par la norme NFC, qui est stocké dans la mémoire non volatile 9, est réalisée par le programme par défaut par exemple une application de l'unité de commande distante 7 via le deuxième module de communication en champ proche 8, successivement,
- une étape de décodage 003, lors de laquelle le décodage de l'enregistrement donne accès à une URL redirigeant vers un site internet dédié proposant en téléchargement le programme, par exemple une application, adapté pour le système d'exploitation du deuxième module de communication en champ proche 8 et/ou à la documentation de l'appareillage électrique configurable 1.

Ce procédé de découverte peut être réalisé même si l'appareillage électrique configurable 1 n'est pas alimenté en électricité.

Ce procédé de découverte est préalablement effectué au moins une fois avant le procédé d'identification, le procédé d'affectation, le procédé de configuration, le procédé de surveillance, le procédé de diagnostic après déclenchement selon l'invention.

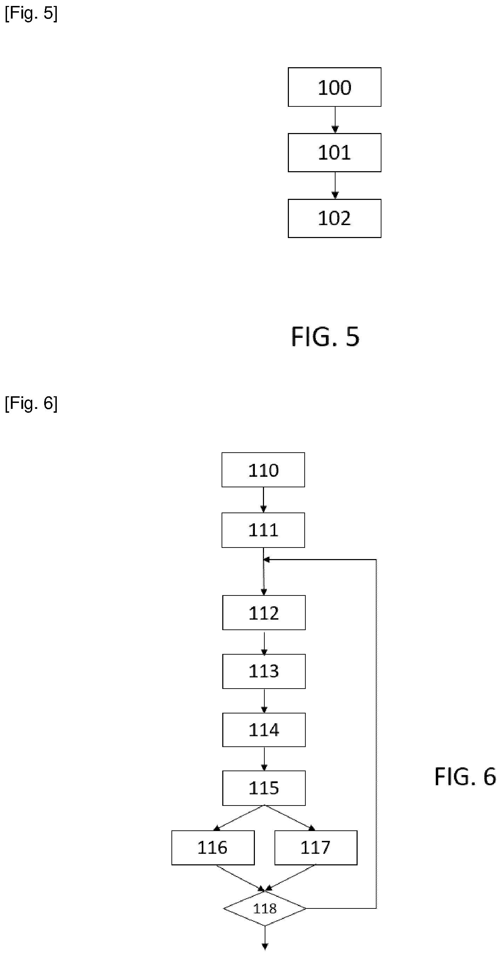

La figure 5 illustre un exemple de procédé d'identification de l'appareillage électrique configurable selon l'invention.

Dans cet exemple illustré à la figure 5, le procédé d'identification comprend :
- une étape d'approche après découverte 100, lors de laquelle l'unité de commande distante 7, dont le deuxième module de communication en champ proche 8 est activé, est approchée de l'appareillage électrique configurable 1 de préférence au niveau de la zone de couplage 11 et préférentiellement à une distance inférieure à 5 centimètres, successivement
- ladite étape d'identification de l'appareillage électrique configurable 101, lors de laquelle au moins une donnée parmi ledit ensemble de données représentatif des caractéristiques de l'appareillage électrique configurable 1 stocké dans ladite au moins une mémoire non volatile 9 est lue par ladite unité de commande distante 7 par communication en champ proche, successivement
- une étape d'affichage 102, lors de laquelle ladite au moins une donnée parmi ledit ensemble de données représentatifs des caractéristiques de l'appareillage électrique configurable 1 est affichée par un afficheur 16 de l'unité de commande distante 7.

Cet exemple de procédé d'identification permet d'identifier l'appareillage électrique configurable 1 que l'appareillage électrique configurable 1 soit alimenté ou non.

La figure 6 illustre un procédé d'affectation dans un tableau électrique d'au moins deux appareillages électriques configurables selon l'invention.

Dans cet exemple illustré à la figure 6, le procédé d'affectation dans un tableau électrique d'au moins deux appareillages électriques configurables selon l'invention comprend :
- une étape de mise à disposition d'au moins deux appareillages électriques configurables (non représentée), à savoir au moins un premier appareillage électrique configurable 1 et un deuxième appareillage électrique configurable 1, lors de laquelle au moins le premier appareillage électrique configurable 1 et le deuxième appareillage électrique configurable 1 sont mis à disposition sans être installés dans le tableau électrique,
- la mise en oeuvre du procédé de découverte décrit précédemment 110 à au moins un desdits au moins deux appareillages électriques configurables, et
- une étape de récupération d'un ensemble de paramètres relatifs à la topologie de l'installation électrique 111, lors de laquelle un ensemble de paramètres relatifs à la topologie de l'installation électrique à réaliser est récupéré par une connexion de l'unité de commande distante 7 à un serveur distant 15, successivement
- la mise en oeuvre du procédé d'identification décrit précédemment 112, pour le premier appareillage électrique configurable 1 et réalisée en absence d'alimentation directe de ladite au moins une mémoire non volatile 9, successivement
- une étape de recherche 113, lors de laquelle une première position prédéterminée du premier appareillage électrique configurable 1 est recherchée parmi l'ensemble de paramètres relatifs à la topologie de l'installation électrique à réaliser par l'unité de commande distante 7 en fonction de ladite au moins une donnée d'identification, puis lors de laquelle l'ensemble de paramètres de réglages du premier appareillage électrique configurable 1 est recherché parmi l'ensemble de paramètres de réglages de l'installation électrique à réaliser par l'unité de commande distante 7 et en fonction de la première position prédéterminée, successivement
- une étape d'affectation 114, lors de laquelle l'unité de commande distante 7 affecte à ladite au moins une donnée d'identification du premier appareillage électrique configurable 1 la première position prédéterminée dans le tableau électrique,
- ladite étape de configuration du premier appareillage électrique configurable 115, lors de laquelle au moins une donnée parmi ledit ensemble de paramètres de réglages est stockée dans ladite au moins une mémoire non volatile 9 par ladite unité de commande distante 7 par communication en champ proche,
- une étape de pré-installation 116, lors de laquelle une étiquette d'identification indiquant la première position prédéterminée et apposée sur le premier appareillage électrique configurable 1 pour identifier le premier appareillage électrique configurable 1 lors de son installation dans le tableau électrique, et/ou
- une étape d'installation 117 dans le tableau électrique, lors de laquelle le premier appareillage électrique configurable 1 est installé dans le tableau électrique à la première position prédéterminée,
- la réitération 118 des étapes 112 à 117 pour au moins le deuxième appareillage électrique 1.

De préférence, lors de l'étape de pré-installation 116, ladite étiquette d'identification est imprimée par ladite imprimante connectée à l'unité de commande distante 7.

Avantageusement, ce procédé permet à l'installateur de savoir à quel endroit du tableau électrique une pluralité d'appareillages électriques configurable 1 doit être installée et en parallèle de configurer la pluralité d'appareillages électriques configurables 1.

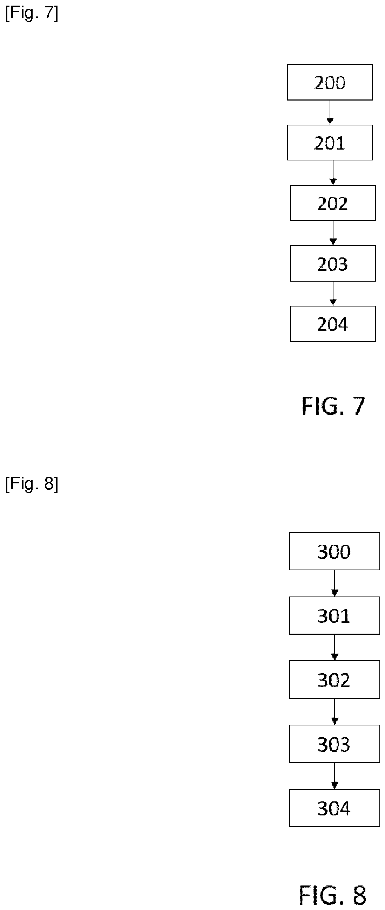

La figure 7 illustre le procédé de configuration de l'appareillage électrique configurable selon une première variante de l'invention.

Dans cet exemple illustré à la figure 7, le procédé de configuration de l'appareillage électrique configurable selon la première variante de l'invention comprend :
- ladite étape d'installation de l'appareillage électrique configurable (non représentée), lors de laquelle l'appareillage électrique configurable 1 est installé dans le tableau électrique, puis
- la mise en oeuvre du procédé de découverte décrit précédemment 200, successivement
- une étape de récupération d'un ensemble de paramètres de réglages de l'installation 201, lors de laquelle un ensemble de paramètres de réglages de l'installation électrique à réaliser est récupéré par une connexion de l'unité de commande distante 7 à un serveur distant 15,
- la mise en oeuvre du procédé d'identification décrit précédemment 202, successivement
- une étape de recherche 203, lors de laquelle l'ensemble de paramètres de réglages de l'appareillage électrique configurable 1 est recherché parmi l'ensemble de paramètres de réglages de l'installation électrique à réaliser par l'unité de commande distante 7, successivement
- ladite étape de configuration de l'appareillage électrique configurable 204, lors de laquelle au moins une donnée parmi ledit ensemble de paramètres de réglages est stockée dans ladite au moins une mémoire non volatile 9 par ladite unité de commande distante 7 par communication en champ proche.

Cette première variante de procédé de configuration permet de configurer l'appareillage électrique configurable 1, par exemple de type disjoncteur, installé dans le tableau électrique, avec des paramètres provenant du serveur distant 15 que l'appareillage électrique configurable 1 soit alimenté ou non en électricité par exemple par le réseau électrique.

La figure 8 illustre le procédé de configuration de l'appareillage électrique configurable selon une deuxième variante de l'invention.

Dans cet exemple illustré à la figure 8, le procédé de configuration de l'appareillage électrique configurable selon la deuxième variante de l'invention comprend :
- une étape d'installation de l'appareillage électrique configurable (non représentée), lors de laquelle l'appareillage électrique configurable 1 est installé dans le tableau électrique, puis
- la mise en oeuvre du procédé de découverte décrit précédemment 300, successivement
- la mise en oeuvre du procédé d'identification décrit précédemment 301, successivement
- une étape de présentation 302, lors de laquelle les choix de réglages possibles sont présentés avec un guide et des explications par l'unité de commande distante 7, successivement
- une étape de sélection manuelle 303, lors de laquelle au moins une donnée parmi ledit ensemble de paramètres de réglages est sélectionnée manuellement par l'utilisateur,
- ladite étape de configuration de l'appareillage électrique configurable 304, lors de laquelle au moins une donnée parmi ledit ensemble de paramètres de réglages est stockée dans ladite au moins une mémoire non volatile 9 par ladite unité de commande distante 7 par communication en champ proche.

Cette deuxième variante de procédé de configuration permet de configurer l'appareillage électrique configurable 1, par exemple de type disjoncteur, installé dans le tableau électrique, avec des paramètres déterminés par un utilisateur que l'appareillage électrique configurable 1 soit alimenté ou non en électricité par exemple par le réseau électrique.

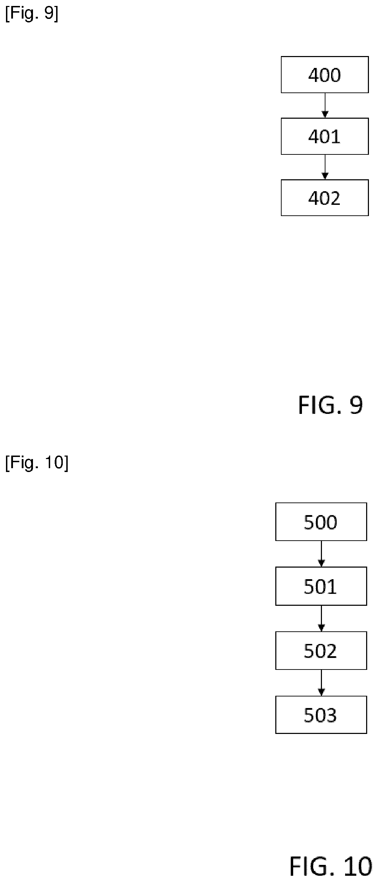

La figure 9 représente un exemple d'un procédé de surveillance de l'appareillage électrique configurable selon l'invention et d'un procédé de diagnostic de l'appareillage électrique configurable selon l'invention,

Dans cet exemple illustré à la figure 9, le procédé de surveillance de l'appareillage électrique configurable selon l'invention et le procédé de diagnostic de l'appareillage électrique configurable selon l'invention comprennent :
- une étape d'installation de l'appareillage électrique configurable (non représentée), lors de laquelle l'appareillage électrique configurable 1 est installé dans le tableau électrique et est alimenté en électricité par le réseau électrique, puis
- la mise en oeuvre du procédé de découverte décrit précédemment 400, successivement,
- une étape de surveillance en temps réel de l'appareillage électrique configurable 401, lors de laquelle au moins une donnée parmi l'ensemble de données représentatif de l'état de fonctionnement de l'appareillage électrique configurable 1 est communiquée par ladite unité de contrôle électronique 4 et est lue par ladite unité de commande distante 7 par communication en champ proche en utilisant ladite au moins une mémoire non volatile 9 comme passerelle, ou
- une étape de diagnostic de l'appareillage électrique configurable 402, lors de laquelle au moins une donnée parmi l'ensemble de données représentatif de l'historique de fonctionnement de l'appareillage électrique configurable 1 stocké dans ladite au moins une mémoire non volatile 9 est lue par ladite unité de commande distante 7 par communication en champ proche.

Après lecture, de préférence l'affichage de ladite une donnée parmi l'ensemble de données représentatif de l'historique de fonctionnement ou de déclenchement de l'appareillage électrique configurable 1 est affichée par l'afficheur 16 de l'unité de commande distante 7 (non représenté).

Ainsi, il est possible de surveiller localement l'appareillage électrique configurable 1, par exemple de type disjoncteur, installé dans le tableau électrique. La surveillance en temps réel peut être effectuée si et seulement si l'appareillage électrique configurable 1 est alimenté en électricité par exemple par le réseau électrique. En effet, ceci est rendu possible car l'ensemble de données représentatif de l'état de fonctionnement de l'appareillage électrique configurable 1 n'est pas stocké dans la mémoire non volatile 9, mais communicable par l'unité de contrôle électronique 4 à travers la mémoire non volatile 9. Le diagnostic peut être effectué que l'appareillage électrique configurable 1 soit alimenté en électricité par exemple par le réseau électrique ou non.

La figure 10 représente un exemple d'un procédé de diagnostic après déclenchement de l'appareillage électrique configurable 1 de protection de type disjoncteur selon l'invention.

Dans cet exemple illustré à la figure 10, le procédé de diagnostic après déclenchement comprend :
- une étape d'installation de l'appareillage électrique configurable 1 de type disjoncteur (non représentée), lors de laquelle l'appareillage électrique configurable 1 est installé dans le tableau électrique, suivie postérieurement par
- la mise en oeuvre du procédé de découverte décrit précédemment 500, successivement,
- ladite étape de déclenchement de l'appareillage électrique configurable de type disjoncteur 501, lors de laquelle l'appareillage électrique configurable 1 est déclenché et n'est plus alimenté en électricité par le réseau électrique, suivie postérieurement par
- ladite première étape de diagnostic de l'appareillage électrique configurable après déclenchement 502, lors de laquelle au moins une donnée parmi un ensemble de données représentatif de l'historique de déclenchement de l'appareillage électrique configurable 1 stocké dans ladite au moins une mémoire non volatile 9 est lue par ladite unité de commande distante 7 par communication en champ proche, et/ou,
- la deuxième étape de diagnostic de l'appareillage électrique configurable après déclenchement 503, lors de laquelle au moins une donnée parmi l'ensemble de données représentatif de l'historique de fonctionnement de l'appareillage électrique configurable 1 stocké dans ladite au moins une mémoire non volatile 9 est lue par ladite unité de commande distante 7 par communication en champ proche.

Après lecture, de préférence l'affichage de ladite une donnée parmi l'ensemble de données représentatif de l'historique de fonctionnement et/ou de déclenchement de l'appareillage électrique configurable 1 est affichée par l'afficheur 16 de l'unité de commande distante 7 (non représenté).

Ainsi, il est possible de diagnostiquer l'appareillage électrique configurable 1, par exemple de type disjoncteur, installé dans le tableau électrique après son déclenchement et avant son réarmement alors que l'appareillage électrique configurable 1 n'est plus alimenté en électricité de préférence par le réseau électrique.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Appareillage électrique configurable (1) par communication en champ proche comprenant :
- un boîtier (2),
- au moins une ligne électrique (3) agencée pour être raccordée au réseau électrique,
- une unité de contrôle électronique (4) configurée pour être alimentée par le réseau électrique pour piloter une fonction de déclenchement ou pour piloter une fonction de mesure du temps ou pour piloter une fonction de communication à partir d'au moins un ensemble de paramètres de réglages,
- un premier module de communication en champ proche (5) comprenant au moins un organe d'émission/réception d'ondes électromagnétiques (6) agencé pour communiquer par ondes électromagnétiques avec une unité de commande distante (7) comprenant au moins un deuxième module de communication en champ proche (8),
ledit appareillage électrique configurable (1) est **caractérisé** :
- **en ce que** le premier module de communication en champ proche (5) comprend en outre au moins une mémoire non volatile (9) configurée pour stocker au moins ledit au moins un ensemble de paramètres de réglages et/ou un ensemble de données représentatif des caractéristiques de l'appareillage électrique configurable (1) et/ou un ensemble de données représentatif de l'historique de fonctionnement de l'appareillage électrique configurable (1), ladite au moins une mémoire non volatile (9) étant reliée électriquement audit au moins un organe d'émission/réception d'ondes électromagnétiques (6), et
- **en ce que** le premier module de communication en champ proche (5) est agencé pour être alimenté en énergie au moins par le champ électromagnétique du deuxième module de communication en champ proche (8) de l'unité de commande distante (7) en l'absence d'alimentation directe de ladite au moins une mémoire non volatile (9) de préférence par le réseau électrique ou par une source auxiliaire.

2. Appareillage électrique configurable selon la revendication 1, **caractérisé en ce que** le fonctionnement de ladite au moins une mémoire non volatile (9) est indépendant de l'alimentation de ladite unité de contrôle électronique (4) en l'absence d'alimentation directe de ladite au moins une mémoire non volatile (9) de préférence par le réseau électrique ou par une source auxiliaire, ladite au moins une mémoire non volatile (9) étant une entité disjointe de ladite unité de contrôle électronique (4) ou étant une entité adjointe à ladite unité de contrôle électronique (4).

3. Appareillage électrique configurable selon l'une quelconque des revendications 1 à 2, **caractérisé en ce que** ladite au moins une mémoire non volatile (9) est reliée électriquement à l'unité de contrôle électronique (4) en outre pour alimenter directement en électricité le premier module de communication en champ proche (5) de préférence par le réseau électrique ou la source auxiliaire en présence d'une alimentation directe par le réseau électrique ou la source auxiliaire de l'appareillage électrique configurable (1).

4. Appareillage électrique configurable selon la revendication 3, **caractérisé en ce que** ladite au moins une mémoire non volatile (9) est reliée électriquement à l'unité de contrôle électronique (4) au moins pour donner accès à l'unité de contrôle électronique (4) au moins audit un ensemble de paramètres de réglages stocké dans ladite au moins une mémoire non volatile (9).

5. Appareillage électrique configurable selon l'une quelconque des revendications 3 à 4, **caractérisé en ce que** ladite au moins une mémoire non volatile (9) est reliée électriquement à l'unité de contrôle électronique (4) au moins pour transmettre de l'unité de contrôle électronique (4) vers ladite au moins une mémoire non volatile (9) au moins un signal électrique représentatif de l'historique de fonctionnement de l'appareillage électrique configurable (1) pour stocker ledit ensemble de données représentatif de l'historique de fonctionnement de l'appareillage électrique configurable (1) dans ladite au moins une mémoire non volatile (9).

6. Appareillage électrique configurable selon l'une quelconque des revendications 3 à 5, **caractérisé en ce que** ladite au moins une mémoire non volatile (9) est reliée électriquement à l'unité de contrôle électronique (4) et ladite au moins une mémoire non volatile (9) est apte et destinée à fonctionner comme une passerelle pour donner accès à un ensemble de données représentatif de l'état de fonctionnement de l'appareillage électrique configurable (1) communicable par l'unité de contrôle électronique (4).

7. Appareillage électrique configurable selon l'une quelconque des revendications 1 à 6, **caractérisé en ce que** le boîtier (2) comprend une face avant (10) comprenant une zone de couplage (11) située dans le champ dudit au moins un organe d'émission/réception d'ondes électromagnétiques (6) du premier module de communication en champ proche (5) et **en ce que** ladite zone de couplage (11) est identifiable de l'extérieur de la face avant (10) de préférence par au moins un repère.

8. Appareillage électrique configurable selon la revendication 7, **caractérisé en ce que** la zone de couplage (11) peut être recouverte par un couvercle (12) comportant au moins un organe de blocage d'ondes électromagnétiques.

9. Appareillage électrique configurable selon l'une quelconque des revendications 1 à 8, **caractérisé en ce que** ladite au moins une mémoire non volatile (9) est une mémoire EEPROM.

10. Appareillage électrique configurable selon l'une quelconque des revendications 1 à 9, **caractérisé en ce qu'**il comprend une unique mémoire non volatile (9).

11. Appareillage électrique selon l'une quelconque des revendications 1 à 10, **caractérisé en ce que** l'appareillage électrique configurable (1) est un appareillage électrique configurable de protection de type disjoncteur comprenant une unité de coupure (13) mécanique ou électronique pour couper ladite au moins une ligne électrique (3) en cas de défaut détecté par l'unité de contrôle électronique (4).

12. Installation de configuration et/ou de diagnostic et/ou de surveillance dudit au moins un appareillage électrique configurable (1) comprenant ledit au moins un appareillage électrique configurable (1) et l'unité de commande distante (7), **caractérisée en ce que** ledit au moins un appareillage électrique configurable (1) est selon l'une quelconque des revendications 1 à 11.

13. Installation de configuration et/ou de diagnostic et/ou de surveillance selon la revendication 12, **caractérisée en ce qu'**elle comprend en outre au moins un serveur distant (15) configuré pour communiquer à distance avec ladite unité de commande distante (7).

14. Procédé d'identification de l'appareillage électrique configurable (1) selon l'une quelconque des revendications 1 à 11 dans ladite installation selon l'une quelconque des revendications 12 à 13, comprenant au moins :
- une étape d'identification de l'appareillage électrique configurable (101), lors de laquelle au moins une donnée parmi ledit ensemble de données représentatif des caractéristiques de l'appareillage électrique configurable (1) stocké dans ladite au moins une mémoire non volatile (9) est lue par ladite unité de commande distante (7) par communication en champ proche.

15. Procédé de configuration de l'appareillage électrique configurable (1) selon l'une quelconque des revendications 1 à 11 dans ladite installation selon l'une quelconque des revendications 12 à 13, comprenant au moins :
- une étape de configuration de l'appareillage électrique configurable (204), (304), lors de laquelle au moins une donnée parmi ledit ensemble de paramètres de réglages est stockée dans ladite au moins une mémoire non volatile (9) par ladite unité de commande distante (7) par communication en champ proche.

16. Procédé de surveillance de l'appareillage électrique configurable (1) selon l'une quelconque des revendications 1 à 11 dans ladite installation selon l'une quelconque des revendications 12 à 13, comprenant au moins :
- une étape d'installation de l'appareillage électrique configurable, lors de laquelle l'appareillage électrique configurable (1) est installé dans un tableau électrique et est alimenté en électricité par le réseau électrique,
- une étape de surveillance en temps réel de l'appareillage électrique configurable (401), lors de laquelle au moins une donnée parmi l'ensemble de données représentatif de l'état de fonctionnement de l'appareillage électrique configurable (1) est communiquée par ladite unité de contrôle électronique (4) et est lue par ladite unité de commande distante (7) par communication en champ proche en utilisant ladite au moins une mémoire non volatile (9) comme passerelle.

17. Procédé de diagnostic de l'appareillage électrique configurable (1) selon l'une quelconque des revendications 1 à 11 dans ladite installation selon l'une quelconque des revendications 12 à 13, comprenant au moins :
- une étape de diagnostic de l'appareillage électrique configurable (402), lors de laquelle au moins une donnée parmi l'ensemble de données représentatif de l'historique de fonctionnement de l'appareillage électrique configurable (1) stocké dans ladite au moins une mémoire non volatile (9) est lue par ladite unité de commande distante (7) par communication en champ proche.

18. Procédé de diagnostic après déclenchement de l'appareillage électrique configurable (1) de protection de type disjoncteur selon la revendication 11 dans ladite installation selon l'une quelconque des revendications 12 à 13, comprenant au moins :
- une étape d'installation de l'appareillage électrique configurable (1) de type disjoncteur, lors de laquelle l'appareillage électrique configurable (1) est installé dans un tableau électrique, suivie postérieurement par
- une étape de déclenchement de l'appareillage électrique configurable de type disjoncteur (501), lors de laquelle l'appareillage électrique configurable (1) est déclenché et n'est plus alimenté en électricité par le réseau électrique, suivie postérieurement par
- une première étape de diagnostic de l'appareillage électrique configurable après déclenchement (502), lors de laquelle au moins une donnée parmi un ensemble de données représentatif de l'historique de déclenchement de l'appareillage électrique configurable (1) stocké dans ladite au moins une mémoire non volatile (9) est lue par ladite unité de commande distante (7) par communication en champ proche, et/ou,
- une deuxième étape de diagnostic de l'appareillage électrique configurable après déclenchement (503), lors de laquelle au moins une donnée parmi l'ensemble de données représentatif de l'historique de fonctionnement de l'appareillage électrique configurable (1) stocké dans ladite au moins une mémoire non volatile (9) est lue par ladite unité de commande distante (7) par communication en champ proche.

19. Procédé d'affectation dans un tableau électrique d'au moins deux appareillages électriques configurables selon l'une quelconque des revendication 1 à 11 dans ladite installation selon l'une quelconque des revendications 12 à 13, comprenant :
- une étape de mise à disposition d'au moins deux appareillages électriques configurables, à savoir au moins un premier appareillage électrique configurable (1) et un deuxième appareillage électrique configurable (1), lors de laquelle au moins le premier appareillage électrique configurable (1) et le deuxième appareillage électrique configurable (1) sont mis à disposition sans être installés dans le tableau électrique,
- une étape de récupération d'un ensemble de paramètres relatifs à la topologie de l'installation électrique (111), lors de laquelle un ensemble de paramètres relatifs à la topologie de l'installation électrique à réaliser est récupéré par une connexion de l'unité de commande distante (7) à un serveur distant (15),
- une étape d'identification de l'appareillage électrique configurable (112), lors de laquelle au moins une donnée d'identification parmi ledit ensemble de données représentatif des caractéristiques du premier appareillage électrique configurable (1) stocké dans ladite au moins une mémoire non volatile (9) est lue par ladite unité de commande distante (7) par communication en champ proche en absence d'alimentation directe de ladite au moins une mémoire non volatile (9), successivement
- une étape de recherche (113), lors de laquelle une première position prédéterminée du premier appareillage électrique configurable (1) est recherchée parmi l'ensemble de paramètres relatifs à la topologie de l'installation électrique à réaliser par l'unité de commande distante (7) en fonction de ladite au moins une donnée d'identification,
- une étape d'affectation (114), lors de laquelle l'unité de commande distante (7) affecte à ladite au moins une donnée d'identification du premier appareillage électrique configurable (1) la première position prédéterminée dans le tableau électrique,
- une étape d'installation (117) dans le tableau électrique, lors de laquelle le premier appareillage électrique configurable (1) est installé dans le tableau électrique à la première position prédéterminée,
- la réitération (118) des étapes d'identification de l'appareillage électrique configurable (112), de recherche (113), d'affectation (114) et d'installation (117) pour au moins le deuxième appareillage électrique (1).
